# NEUE EUROPÄISCHE PATENTSCHRIFT

(11) **EP 3 805 181 B2**
(45) Veröffentlichungstag und Bekanntmachung des Hinweises auf die Entscheidung über den Einspruch: **01.10.2025**
(45) Hinweis auf die Patenterteilung: 19.10.2022
(21) Anmeldenummer: 20206301.2
(22) Anmeldetag: 30.03.2015
(51) Int. Cl.: C04B 28/06, C04B 28/14, C04B 28/16, C04B 111/00, C04B 111/34, C04B 111/60

(54) **VERFAHREN ZUR AUFTRAGUNG EINER SCHNELLTROCKNENDEN BAUSTOFFZUSAMMENSETZUNG AUF BASIS EINES MINERALISCHEN HYBRIDBINDEMITTELS**
PROCESS FOR APPLYING A FAST DRYING BUILDING MATERIAL COMPOSITION BASED ON A MINERAL HYBRID ADHESIVE
PROCEDE POUR APPLIQUER UNE COMPOSITION DE MATÉRIAU DE CONSTRUCTION À SÉCHAGE RAPIDE À BASE D'UN LIANT HYBRIDE MINÉRAL

(30) Priorität: 31.03.2014 EP 14162889
(43) Veröffentlichungstag der Anmeldung: 14.04.2021
(62) Teilanmeldung aus: 15741864.1
(73) Patentinhaber: SIKA TECHNOLOGY AG, 6340 Baar (CH)
(72) Erfinder: Motzet, Hubert, 48720 Rosendahl (DE); Börsting, Wolfgang, 48727 Billerbeck (DE); Knoebel, Markus, 48653 Coesfeld (DE); Meinersmann, Thomas, 48727 Billerbeck (DE)
(74) Vertreter: Sika Patent Attorneys

(56) Entgegenhaltungen:
- EP-A2- 1 785 405
- WO-A1-2012/143221
- WO-A1-2014/108436
- WO-A1-96/35649
- DE-A1- 19 754 826
- DE-A1- 3 218 446
- DE-T2- 60 304 041
- DE-U1- 20 121 423
- JP-A- 2005 298 221
- JP-A- 2007 238 369
- MATUSINOVIC T. ET AL: "Lithium salts as set accelerators for high alumina cement (internet abstract only)", CEMENT AND CONCRETE RESEARCH., vol. 23, no. 4, 1 July 1993 (1993-07-01), US , pages 885 - 895, XP003027999, ISSN: 0008-8846

## Beschreibung

### Technisches Gebiet

Die vorliegende Erfindung betrifft Verfahren zum Auftrag schnelltrocknender Baustoffzusammensetzungen auf Basis eines mineralischen Hybridbindemittels zur Anwendung im Innenausbau. Die in erfindungsgemäßen Verfahren aufgetragenen Baustoffzusammensetzungen zeichnen sich neben der Tatsache, dass sie im Vergleich zu konventionellen Spachtelmassen signifikant schneller trocknen, dadurch aus, dass sie ein schwund- und spannungsarmes Produkt mit hohen Biegezug- und Druckfestigkeiten liefern.

### Stand der Technik

Baustoffe werden überwiegend auf Basis von Portlandzement, Aluminatzement oder Calciumsulfat (Gips) als Bindemittel formuliert. Dabei werden Kombinationen dieser drei Bindemittel auch als ternäre Mischungen bezeichnet.

In Fußbodenkonstruktionen werden spannungsarme Baustoffe benötigt, die häufig auf Calciumsulfat-Bindemitteln basieren. Diese Bindemittel liegen in abgebundener Form als Gips bzw. Calciumsulfat-Dihydrat (CaSO₄ x 2 H₂O) vor. Für den Einsatz als Bindemittel muss der Rohgips zunächst entwässert werden, was durch Temperaturbehandlung erzielt wird. Dabei entsteht in einer ersten Entwässerungsstufe bei 120°C aus Calciumsulfat-Dihydrat das Calciumsulfat-Hemihydrat (CaSO₄ × ½ H₂O), das bei einer weiteren Temperaturerhöhung auf ca. 350°C zum Calciumsulfatanhydrit (CaSO₄ wasserfrei) umgewandelt wird. Sowohl das Calciumsulfat-Hemihydrat als auch das Anhydrit reagiert bei Wasserzugabe - dem Anmachwasser beim Anmischen des Baustoffes - wieder zum Calciumsulfat-Dihydrat.

Die Abbindereaktion des Hemihydrats verläuft in der Regel relativ schnell, so dass der Gipsbaustoff bereits nach wenigen Tagen hohe Festigkeiten erreicht. Nachteilig ist bei vorwiegend auf Gips basierenden Baustoffen jedoch, dass die Abbindereaktion nur etwa 13 Masse-% des Anmachwassers (bezogen auf das Bindemittel-Hemihydrat) absorbiert, während beispielsweise zementöse Bindemittel in der Lage sind, bis zu 70 Masse-% des Anmachwassers zu binden. Weil für das Anmachen in der Regel mehr Wasser erforderlich ist, als die Gipsbaustoffe aufnehmen können, ist für die Härtung solcher Baustoffe bis zur Belegreife regelmäßig auch ein Verdunsten des überschüssigen Wassers erforderlich. Dies erfordert Zeit, die vor einer weiteren Bearbeitung abgewartet werden muss.

Im Vergleich beispielsweise zu Zementspachtelmassen weisen Gipsspachtelmassen jedoch den Vorteil eines signifikant geringeren Schwindverhaltens auf. Zementspachtelmassen quellen nach dem Erstarren zunächst auf, was aber durch den in der Folge der physikalischen Trocknung einsetzenden Schwund überkompensiert wird, so dass sich die Masse insgesamt zusammenzieht. Dieses Schwinden führt dazu, dass zementöse Spachtelmassen im Verbund auf dem Untergrund erhebliche Spannungen aufbauen können und es zur Rissbildung und zum Abplatzen unzureichend mit dem Untergrund verbundener Zementspachtelmassen kommen kann.

Im Gegensatz zu Zementspachtelmassen muss bei Gipsspachtelmassen ein größerer Anteil des Wassers verdunsten, so dass das chemische Schwinden bei Gipsspachtelmassen geringer ausfällt. Nach der Trocknung solcher Spachtelmassen wird daher nur eine geringe Dimensionsänderung gegenüber dem Nullwert erhalten.

Ein wesentlicher Nachteil von Gips-basierten Spachtelmassen besteht jedoch, wie vorstehend angedeutet, darin, dass diese nur sehr langsam trocknen. Weil nur ein geringer Teil des Anmachwassers durch Hydratisierung des Calciumsulfats gebunden wird, muss der überwiegende Teil des Wassers an die Umgebung abgegeben werden. Dies führt vor allem bei größeren Schichtstärken, beispielsweise von 6 bis 50 mm, oder ungünstigen klimatischen Verhältnissen mit hoher Luftfeuchtigkeit zu Trocknungszeiten von mehreren Tagen bis Wochen. Diese Trocknungszeit kann dann nur durch zusätzliche Maßnahmen, beispielsweise den Einsatz von Luftentfeuchtern oder Luftaustausch, verkürzt werden, was jedoch mit einem höheren Kostenaufwand verbunden ist.

Die Vorteile von Gipsspachtelmassen kommen aufgrund des vorstehend geschilderten Sachverhalts insbesondere auf Untergründen zum Tragen, bei denen es auf die chemische und physikalische Kompatibilität ankommt. Beispielsweise kann es auf Anhydritestrichen nicht zu einer schädlichen Wechselwirkung zwischen dem Estrich und einer darauf applizierten Gipsspachtelmasse kommen, so dass ein Grundieren des Estrichs in der Regel nur aus Gründen der Saugminderung erforderlich ist. Dadurch kann eine Gipsspachtelmasse ohne Wartezeit auf die Grundierung aufgebracht werden, ohne dass gewartet werden muss, bis die Grundierung vollständig abgetrocknet ist.

Spachtelmassen, insbesondere solche, die im Bereich des Fußbodens, vorzugsweise zum Glätten, Egalisieren und/oder Nivellieren von Untergründen verwendet werden, und die anschließend mit einem Nutzbelag versehen werden, sind in unterschiedlicher Zusammensetzung bekannt. So beschreibt beispielsweise die EP 0 379 477 B eine Spachtelmasse, die als Bindemittel im Wesentlichen Zement enthält. Diese Spachtelmasse enthält zusätzlich Gips in einer maximalen Konzentration von 10 Gew.-%, der zum Ausgleich von Schwund und als Fließverbesserungsmittel eingesetzt wird. Des Weiteren enthält die Spachtelmasse bis zu 3 Gew.-% Polypropylenfasern, die der zementösen Spachtelmasse zusätzliche Festigkeit und verbesserte Deformationseigenschaften verleihen sollen.

Ein schnellhärtendes zementäres Bindemittel mit geringer Schwindung wird in der DE 197 54 826 A1 beschrieben. Neben einem wesentlichen Anteil an schnellhärtendem Portlandzement mit einem C₃A-Klinkerphasenanteil im Bereich von 4 bis 12 Massen.-% enthält das Bindemittel einem geringen Anteil an Calciumsulfatverbindungen, Calciumhydroxid und gegebenenfalls weiteren Additiven. Im Rahmen der DE 197 54 826 A1 wird das Schwinden durch eine genaue Abstimmung des in der Zusammensetzung gebildeten Ettringits, das zu einer Exapnsion des Bindelmittel führt, und dem Portlandzement, der ein Schwinden verursacht, minimiert.

Eine weiter entwickelte Spachtelmasse wird in der DE 101 59 339 A2 beschrieben, die als Bindemittel ein Gemisch an Calciumsulfat-Hemihydrat mit einem zweiten hydraulischen Bindemittel aufweist, wobei das Massenverhältnis des Calciumsulfats zum zweiten Bindemittel zwischen 8:1 und 8:0,1 variiert. Die in der DE 101 59 339 A2 beschriebenen Bindemittel enthalten zusätzlich Fasern aus beispielsweise Polyacrylnitril. Nachteilig, bei den in der DE 101 59 339 offenbarten Spachtelmassen ist jedoch, wie dies bereits im Vorstehenden angedeutet wurde, dass infolge des hohen Anteils an Calciumsulfat-Bindemittel die Zusammensetzungen nur relativ langsam trocknen und dass daher relativ lange gewartet werden muss, bis eine weitere Belegung oder Bearbeitung der mit der Spachtelmasse versehenen Oberfläche möglich ist.

Die DE 32 18 446 A1 beschreibt ein Bindemittel für ein Baustoffgemisch auf Basis von Calciumaluminat in Form von Mono- bis Tricalciumaluminat in feiner Körnung mit fein aufgemahlenem Gips in Form von Anhydrid, Halbhydrat oder Dihydrat, wobei die beiden Bestandteile in einer Menge vermischt sind, dass auf 1 Mol Aluminiumoxid in der Calciumaluminatverbindung 3 Mol oder mehr Calciumsulfat kommen. Das Bindemittel kann zusätzlich mit Calciumcarbonat vermischt und als Brandschutzmaterial verwendet werden, da es einen hohen Anteil an kristallin gebundenem Wasser aufweist.

Die WO 96/35649 befasst sich ebenfalls mit Materialien mit hoher Feuerresistenz, die neben Calciumaluminathydrat und/oder Calciumsulfatdihydrat mindestens 5 Gew.-% Ettringit und/oder Aluminiumphosphat enthalten. Durch das Ettringit bzw. Aluminiumphosphat werden dem Material einerseits gute mechanische Eigenschaften vermittelt, andererseits wird das Ettringit und/oder Aluminiumphosphat beim Erhitzen unter Energieverbrauch zersetzt, was dem Material flammschützende Eigenschaften verleiht.

Die DE 201 21 423 A1 beschreibt eine Spachtelmasse auf Basis eines Gemischs von Calciumsulfat und einem zweiten hydraulischen Bindemittel, das aus Portlandzement, Portlandkompositzement, Hochofenzement und/oder Calciumaluminatzement bestehen kann. Das Verhältnis von Calciumsulfat-Bindemittel zu zweitem Bindemittel soll sich im Bereich von 8:1 bis 8:0.1 bewegen. Durch Variation des Verhältnisses soll sich ein gewünschtes rheologisches Verhalten in einfacher Weise einstellen lassen.

Die DE 603 04 041 T2 befasst sich schließlich mit einem Ettringit-Bindemittel auf Basis von Calciumsulfaten und Calciumaluminatverbindungen zur Verwendung in dichten Mörteln, die für die Herstellung oder Reparatur von kurzfristig in Betreib zu nehmenden Bauwerken herangezogen werden können. Das in der DE 603 04 041 T2 beschriebene Bindemittel ist so abgestimmt, dass die Calcium- und Aluminiumionen gleichzeitig und gleichmäßig über den gesamten Hydratationsprozess verteilt freigesetzt werden, so dass das Ettringit ohne vorzeitige Blockierung an den Schnittstellen der wasserferien Körner im Bindemittel gebildet werden kann. Für die Zusammensetzungen der DE 603 04 041 T2 wird ein minimales Schwinden von 0,6 mm/m nach sieben Tagen Trockung bei 50 % relativer Luftfeuchtigkeit angegeben.

Ziel der vorliegenden Erfindung war daher die Bereitstellung eines Verfahrens zum Auftrag einer schnelltrocknenden Gipszusammensetzung, die die Vorteile bekannter Gipsspachtelmassen, insbesondere ein vorteilhaft geringes Schwinden und einen geringen Spannungsaufbau, mit den Vorteilen hoher Festigkeit und schneller Weiterbearbeitbarkeit verbindet.

Erfindungsgemäß werden diese Aufgaben durch ein Verfahren gemäß Anspruch 1 gelöst.

Calciumaluminat bezeichnet im Sinne der vorliegenden Erfindung anorganische Verbindungen, die im Wesentlichen aus Calciumoxid und Aluminiumoxid als Bestandteilen besteht. Abzugrenzen ist Calciumaluminat somit beispielsweise von Calciumaluminatzementen, die neben Aluminiumoxid und Calciumoxid noch wesentliche Anteile an Siliziumdioxid und Eisenoxiden enthalten. Calciumaluminate bezeichnen daher im Rahmen der vorliegenden Erfindung Verbindungen, in denen der maximale Gehalt an SiO₂ und Eisenoxid (Fe₂O₃), bezogen auf das Gewicht der Verbindung, unter 15 Gew.-% liegt. Vorzugsweise beträgt die kombinierte Menge an CaO und Al₂O₃ mehr als 80 Gew.-%, weiter bevorzugt mehr als 85 Gew.-%, insbesondere mehr als 90 Gew.-%, und am meisten bevorzugt mehr als 95 Gew.-%. Diese Angaben beziehen sich auf die wasserfreie Zusammensetzung, d.h. ein etwaiger Wassergehalt des Calciumaluminats geht nicht in die Berechnung des Gehalts an Al₂O₃ oder CaO bzw. SiO₂ oder Eisenoxid (Fe₂O₃) ein. Ein im Rahmen der vorliegenden Erfindung geeignetes Calciumaluminat ist als Ternal RG von der Kerneos GmbH erhältlich.

Calciumsulfat-Hemihydrat bezeichnet im Rahmen der vorliegenden Erfindung die Verbindung CaSO₄ × ½ H₂O, mit Calciumsulfat-Anhydrit ist die Verbindung CaSO₄ (wasserfrei) gemeint, mit Calciumsulfat-Dihydrat ist die Verbindung CaSO₄ × 2 H₂O gemeint
Im Rahmen der vorliegenden Erfindung als "Bindemittel" bezeichnete Stoffe zeichnen sich dadurch aus, dass sie infolge eines Kontakts mit Wasser Wassermoleküle absorbieren und in das Kristallgitter einlagern. Ausgenommen von dieser Regel ist nur das Calciumsulfat-Dihydrat, das kein weiteres Wasser binden kann, aber aus Zweckmäßigkeitserwägungen als Bindemittel behandelt werden soll.

Im Rahmen der vorliegenden Erfindung hat es sich als günstig herausgestellt, wenn das Gewichtsverhältnis von Calciumaluminat zu Calciumsulfat-Hemihydrat und/oder Calciumsulfat-Anhydrit und/oder Calciumsulfat-Dihydrat im Bereich von etwa 1:1,6 bis 1:4, bevorzugt im Bereich von etwa 1:2 bis 1:3,5, und besonders bevorzugt im Bereich von etwa 1:2,1 bis 1:2,8 liegt.

In Bezug auf die Calciumsulfat-Bindemittel ist es weiterhin bevorzugt, wenn diese im Wesentlichen aus Calciumsulfat-Hemihydrat besteht, da ein zu hoher Anteil an Anhydrit zu einer zu schnellen Wasseraufnahme durch den Anhydritbestandteil führt, was die Verarbeitbarkeit der Zusammensetzung beeinträchtigen kann. Infolge dessen ist es bevorzugt, wenn von der Gesamtmenge an Calciumsulfat-Hemihydrat, und -Anhydrit und Dihydrat mindestens 80 Gew.-%, bevorzugt mindestens 90 Gew.-%, und besonders bevorzugt mindestens 95 Gew.-% auf das Calciumsulfat-Hemihydrat entfallen. Ein geeignetes Calciumsulfat-Bindemittel ist beispielsweise unter dem Handelsnamen Hartformgips von der Saint-Gobain Formula GmbH erhältlich. Der Anteil an Calciumsulfat-Dihydrat an der Gesamtmenge an Calciumsulfat-Hemihydrat, -Anhydrit und Dihydrat sollte nicht zu hoch sein, da das Calciumsulfat-Dihydrat nicht in der Lage ist Wasser zu binden. Es ist daher bevorzugt, wenn der Anteil des Calciumsulfat-Dihydrat 10 Gew.-% oder weniger, insbesondere 5 Gew.-% oder weniger, bezogen auf das Gesamtgewicht der Calciumsulfat-Hemihydrat, -Anhydrit und Dihydrat-Bindemittel, beträgt. In einem Beispiel enthält die Zusammensetzung 1 bis 5 Gew.-%, bezogen auf das Gesamtgewicht der Calciumsulfat-Hemihydrat, -Anhydrit und Dihydrat-Bindemittel, an Calciumsulfat-Dihydrat. In einer alternativen Form enthält die Zusammensetzung weniger als 0,1 Gew.-%, bezogen auf das Gesamtgewicht der Calciumsulfat-Hemihydrat, -Anhydrit und Dihydrat-Bindemittel, an Calciumsulfat-Dihydrat.

Hinsichtlich der in die Gipszusammensetzung einzubeziehenden Füllstoffe unterliegt die Zusammensetzung keinen relevanten Beschränkungen, mit der Ausnahme, dass, wenn helle Gipszusammensetzungen formuliert werden sollen, keine Füllstoffe einbezogen werden sollten, die einen sehr dunklen Farbton aufweisen. Besonders geeignete Füllstoffe sind im Rahmen der Erfindung insbesondere carbonatische Füllstoffe, bevorzugt in Form von Calciumcarbonat wie beispielsweise Kalksteinmehl, und Sand, insbesondere Quarzsand. Ein besonders geeigneter Quarzsand weist eine Sieblinie im Bereich von etwa 0 bis 0,5 mm, bevorzugt im Bereich von etwa 0,08 bis 0,4 mm, auf. Ein weiterer geeigneter Quarzsand weist eine Partikelgröße im Bereich von etwa 0,1 bis 1 mm, bevorzugt von etwa 0,2 bis 0,8 mm auf.

Ein geeignetes Calciumcarbonat weist einen mittleren Teilchendurchmesser im Bereich von 2,5 µm und eine Kornlinie mit Rückstandsfreiheit von etwa 40 µm auf. Ein solches Calciumcarbonat wird beispielsweise unter dem Handelsnamen Mikrosöhl durch die Firma Söhlde vertrieben. Ein geeignetes Kalksteinmehl weist eine Feinheit von < 0,1 mm auf.

Die vorstehend beschriebenen Gipszusammensetzungen enthalten ein Lithiumsalz, das die Härtung der Zusammensetzung beschleunigt. Geeignete Lithiumsalze sind insbesondere Lithiumsulfat und Lithiumhalogenide, insbesondere Lithiumchlorid, sowie Lithiumcarbonat. Am meisten bevorzugt ist im Rahmen der vorliegenden Erfindung die Verwendung von Lithiumcarbonat.

Die Lithiumsalze werden in einer Menge von 0,001 bis 0,05 Gew.-%, bevorzugt in einer Menge von etwa 0,005 bis 0,02 Gew.-%, in die Gipszusammensetzung einbezogen. Unterhalb einer Menge von 0,001 % ist die Konzentration des Lithiumsalzes zu gering um eine merklich beschleunigende Wirkung zu vermitteln, während ein Zusatz von mehr als 0,05 Gew.-% zu einer zu schnellen Härtung der Zusammensetzung führt, und somit deren Verarbeitbarkeit beeinträchtigt.

Innerhalb der der vorliegenden Erfindung zugrundeliegenden Untersuchungen hat sich zudem überraschend herausgestellt, dass der Zusatz von Weinsäure und/oder einem Weinsäuresalz positive Auswirkungen auf das Expansionsverhalten, hat und insbesondere eine zu starke Expansion des Materials unterdrückt. Besonders geeignet sind für diesen Zweck Alkalimetallsalze der Weinsäure, bevorzugt in Form von Natrium- oder Kaliumtartrat oder dem Mischsalz Natrium/Kaliumtartrat. Von diesen ist Natrium/Kaliumtartrat am meisten bevorzugt.

Die Weinsäure und/oder ein Weinsäuresalz wird zweckmäßig in einer Menge von etwa 0,15 bis 0,005 Gew.-%, bevorzugt etwa 0,1 bis 0,01 Gew.-%, und besonders bevorzugt etwa 0,08 bis 0,015 Gew.-% in die Gipszusammensetzung einbezogen. Dabei führt eine Menge von weniger als 0,005 Gew.-% nicht zu einer signifikanten Beeinflussung des Expansionsverhaltens, während sich eine Menge von mehr als 0,15 Gew.-% in einer zu starken Verzögerung der Abbindegeschwindigkeit auswirkt, die dazu führt, dass keine ausreichenden Gebrauchseigenschaften, wie Festigkeit oder Oberflächenhärte, erzielt werden.

Die Gipszusammensetzung kann zusätzlich zu den bereits erwähnten Bestandteilen noch weitere übliche Bestandteile, insbesondere Fließmittel, Verdickungsmittel, Farbstoffe und/oder Farbpigmente, Entschäumer, Stabilisierungsmittel, Härtungsverzögerer und/oder Flexibilisierungsmittel, enthalten. Durch den Zusatz solcher an sich bekannter Additive können beispielsweise die Verlaufseigenschaften und das rheologische Verhalten verbessert und an die jeweiligen Anforderungen angepasst, eine Schaumbildung unterdrückt und/oder die Erstarrung (das Aushärten) des Spachtels verzögert werden. Die Gesamtkonzentration solcher Additive beträgt zweckmäßig zwischen etwa 0,1 und 10 Gew.-%, bevorzugt zwischen etwa 0,5 und 5 Gew.-%, und besonders bevorzugt zwischen etwa 1 und 3 Gew.-%.

Als geeignete Farbstoffe in den Gipszusammensetzungen sind unter anderem Eisenoxide zu nennen. Als Flexibilisierungsmittel bzw. zur Verbesserung der Haftung auf dem Untergrund können organische Polymere, beispielsweise auf Basis von Vinylacetat und Ethylen, zugesetzt werden. Ein geeignetes Flexibilisierungsmittel ist unter dem Namen Vinnapas 5025 L von Wacker erhältlich.

Geeignete Stabilisierungsmittel sind Hydroxyethylcellulosen, die beispielsweise als Tylose H 20 P2 von ShinEtsu SE Tylose GmbH & Co. KG erhältlich ist. Geeignete Verdickungsmittel sind unter anderem Methylcellulosen, die beispielsweise unter dem Handelsnamen Culmina^{®} vertrieben werden. Zudem kann es zweckmäßig und wünschenswert sein, den Gipszusammensetzungen welche in einem erfindungsgemäßen Verfahren aufgetragen werden, als Fließmittel einen "Superplastizier" zuzusetzen, beispielsweise in Form eines Polycarboxylatethers, der dem Fachmann im Bereich der Zementchemie ohne weiteres geläufig ist.

Ein geeigneter Verzögerer ist beispielsweise unter dem Handelsnamen Retardan^{®}P von der Sika Technology AG erhältlich. Weitere geeignete Verzögerer sind Natriumgluconat, oder Natriumcitrat.

Ein geeigneter Entschäumer ist beispielsweise unter dem Handelsnamen Foamstar PB1922 von BASF erhältlich.

Wie es sich aus dem Vorstehenden ergibt, handelt es sich bei der Gipszusammensetzung welche in einem erfindungsgemäßen Verfahren aufgetragen wird, um eine Zusammensetzung, deren Härtung im Wesentlichen auf der Aufnahme und Einlagerung von Wasser durch die Gips- und Calciumaluminat-Bindemittel bedingt wird. Dennoch ist nicht ausgeschlossen, dass die Gipszusammensetzung zusätzlich einen Anteil an Zementbindemitteln enthält, beispielsweise bis zu etwa 5 Gew.-%, bevorzugt jedoch nicht mehr als etwa 3 Gew.-%, insbesondere nicht mehr als etwa 1 Gew.-%, und am meisten bevorzugt nicht mehr als etwa 0,1 Gew.-% an Zementbindemitteln.

Der Ausdruck "Zementbindemittel" bezeichnet im Rahmen der vorliegenden Erfindung insbesondere Portland-Zemente, Portland-Kompositzemente und Hochofenzemente sowie Calciumaluminatzemente.

Die Gipszusammensetzung welche in einem erfindungsgemäßen Verfahren aufgetragen wird, weist vorzugsweise infolge ihrer Härtung nach 28 Tagen ein Schwinden von nicht mehr als ± 0,5 mm/m auf, wenn die Härtung bei 25°C und 50% relativer Luftfeuchtigkeit erfolgt. Darüber hinaus oder alternativ dazu ist es bevorzugt, wenn die Gipszusammensetzung welche in einem erfindungsgemäßen Verfahren aufgetragen wird infolge ihrer Härtung nach 3 Stunden ein Schwinden von nicht mehr als ± 0,5 mm/m aufweist, wenn die Härtung bei 25°C und 50% relativer Luftfeuchtigkeit erfolgt. Ganz besonders bevorzugt ist es im Rahmen der vorliegenden Erfindung, wenn über den gesamten Härtungszeitraum von 28 Tagen bei einer Härtung bei 25°C und 50% relativer Luftfeuchtigkeit kein Schwinden von mehr als ± 0,5 mm/m auftritt. Im Vorstehenden bezeichnet ein positiver Wert für das Schwinden eine Ausdehnung der gehärteten Zusammensetzung um den bezeichneten Wert, während ein negatives Schwinden ein Zusammenziehen der Zusammensetzung um den bezeichneten Wert kennzeichnet. Im Rahmen der vorliegenden Erfindung ist das Schwinden gemäß dem im Beispielteil angegebenen Verfahren zu bestimmen.

Dem Fachmann ist es ohne weiteres ersichtlich, dass die Mengen der einzelnen Bestandteile in der Gipszusammensetzung welche in einem erfindungsgemäßen Verfahren aufgetragen wird, auch von der Applikation und insbesondere davon abhängen, wie dick das Material aufgetragen wird. Für eine dicke Schicht der Gipszusammensetzung welche in einem erfindungsgemäßen Verfahren aufgetragen wird ist ein Gehalt an Bindemittel im Bereich von 25 bis 40 Gew-% ausreichend, während der Gehalt an Füllstoffen in diesem Fall größer sein muss und im Bereich von 60 bis 65 Gew.% liegt. Für eine dünne Schicht (nicht erfindungsgemäß) der Gipszusammensetzung wird hingegen zweckmäßig ein höherer Anteil an Bindemittel, insbesondere im Bereich von etwa 45 bis 70 Gew.-%, bevorzugt etwa 50 bis 60 Gew.-%, gewählt, während der Füllstoffanteil entsprechend geringer ist und insbesondere im Bereich von etwa 30 bis 50 Gew.-%, bevorzugt etwa 40 bis 45 Gew.-%, liegt. Eine dicke Schicht bezeichnet im Rahmen dieser Erfindung eine Schicht von 10 mm oder mehr, vorzugsweise 20 mm oder mehr, bis hin zu 60 mm oder mehr. Eine dünne Schicht ist demzufolge eine Schicht, die weniger als 10 mm dick ist und vorzugsweise eine Dicke im Bereich von 1 bis 6 mm aufweist.

Eine Form der Gipszusammensetzung (nicht erfindungsgemäß ) enthält
8 bis 20 Gew.-% Calciumaluminat-Bindemittel,
25 bis 50 Gew.-% Calciumsulfat-Hemihydrat,
5 bis 12 Gew.-% Calciumcarbonat als Füllstoff,
30 bis 55 Gew.-% Quarzsand,
0,01 bis 0,10 Gew.-% Kaliumnatriumtartrat, sowie
0,005 bis 0,015 Gew.-% Lithiumcarbonat.

Eine Form der Gipszusammensetzung (nicht erfindungsgemäß) zur Applikation einer dicken Schicht enthält
8 bis 15 Gew.-% Calciumaluminat-Bindemittel,
25 bis 40 Gew.-% Calciumsulfat-Hemihydrat,
5 bis 15 Gew.-% Calciumcarbonat als Füllstoff,
40 bis 65 Gew.-% Quarzsand,
0,01 bis 0,15 Gew.-% Kaliumnatriumtartrat, sowie
0,005 bis 0,015 Gew.-% Lithiumcarbonat.

Eine weitere Form (nicht erfindungsgemäß) der Gipszusammensetzung zur Applikation einer dünnen Schicht enthält
12 bis 20 Gew.-% Calciumaluminat-Bindemittel,
30 bis 50 Gew.-% Calciumsulfat-Hemihydrat,
8 bis 15 Gew.-% Calciumcarbonat als Füllstoff,
25 bis 45 Gew.-% Quarzsand,
0,01 bis 0,15 Gew.-% Kaliumnatriumtartrat, sowie
0,005 bis 0,015 Gew.-% Lithiumcarbonat.

Es ist weiterhin bevorzugt, wenn die Zusammensetzung nach der Härtung für einen Tag bei 25°C und 75% relativer Feuchtigkeit einen Restfeuchtegehalt von unter 5 Gew.-% aufweist, wenn sie in einer Dicke von bis zu 60 mm auf ein Substrat aufgebracht wurde.

Weiterhin ist es bevorzugt, wenn die Gipszusammensetzung nach Härtung für 28 Tage bei 50% relativer Luftfeuchtigkeit und 25°C eine Druckfestigkeit von mindestens 30 N/mm², bevorzugt mindestens 40 N/mm² und besonders bevorzugt mindestens 45 N/mm² aufweist. Die Obergrenze der Druckfestigkeit ist nicht wesentlich begrenzt, beträgt aber regelmäßig etwa 70 N/mm², bevorzugt 60 N/mm². Alternativ oder zusätzlich dazu ist es zweckmäßig, wenn die gehärtete Gipszusammensetzung nach 28 Tagen bei 50% Luftfeuchtigkeit und 25°C eine Biegefestigkeit von 8 N/mm², bevorzugt mindestens 10 N/mm², und besonders bevorzugt mindestens 11 N/mm² aufweist. Die Obergrenze für die Biegezugfestigkeit ist ebenfalls nicht wesentlich begrenzt, beträgt aber in der Regel 25 N/mm², bevorzugt 20 N/mm², und besonders bevorzugt 16 N/mm².

Darüber hinaus ist es bevorzugt, wenn die Zusammensetzung bereits nach kurzer Zeit, d.h., einem Tag (24 h), eine relativ hohe Druckfestigkeit und Biegezugfestigkeit aufweist. So weisen die Zusammen- setzungen welche in einem erfindungsgemäßen Verfahren aufgetragen werden vorzugsweise nach Härtung für einen Tag bei 50% relativer Luftfeuchtigkeit und 25°C eine Druckfestigkeit von mindestens 10 N/mm², bevorzugt mindestens 18 N/mm², und besonders bevorzugt mindestens 20 N/mm² auf. Für die maximale Druckfestigkeit gelten die Angaben wie nach 28 Tagen Härtung. Generell ist die Druckfestigkeit jedoch nach einem Tag etwa um 50% geringer als nach 28 Tagen Härtung.

Die Mindestbiegezugfestigkeit nach einem Tag bei entsprechenden Bedingungen liegt vorzugsweise bei mindestens 2 N/mm², insbesondere mindestens 3,5 N/mm² und besonders bevorzugt mindestens 4 N/mm². Die Obergrenze der Biegezugfestigkeit kann nach diesem Zeitraum bei etwa 8 N/mm², bevorzugt etwa 6 N/mm² liegen.

Die vorliegende Erfindung betrifft ein Verfahren zum Auftragen einer Gipszusammensetzung auf ein Substrat gemäss Anspruch 1.

Wie bereits vorstehend dargelegt, weist eine in einem erfindungsgemäßen Verfahren aus der Gipszusammensetzung hergestellte Spachtelmasse ein an die jeweiligen Anforderungen angepasstes rheologisches Verhalten auf, wobei dieses durch die Auswahl der Inhaltsstoffe und über das Verhältnis der Gipszusammensetzung zu Wasser einstellbar ist. Vorzugsweise wird die Zusammensetzung aus der Gipszusammensetzung welche in einem erfindungsgemäßen Verfahren aufgetragen wird mit Wasser in einem Massenverhältnis von Wasser/Gipszusammensetzungen von 0,10 bis 0,40, insbesondere von 0,12 bis 0,30, und vorzugsweise von 0,15 bis 0,26, zu einer fließfähigen oder pastösen Gipszusammensetzung verarbeitet, wobei die Inhaltsstoffe der Gipszusammensetzung eine möglichst homogene Verteilung aufweisen sollten.

Vorzugsweise ist die fließfähige oder pastöse Gipszusammensetzung selbst verlaufend. Des Weiteren ist eine so mit dem erfindungsgemäßen Verfahren hergestellte fließfähige oder pastösen Gipszusammensetzung vorzugsweise pumpfähig, so dass sie mit herkömmlichen, aus dem Bereich der Technik bekannten und dort verwendeten Pumpen an beliebige Stellen förderbar ist.

Hinsichtlich des Substrats, auf das die fließfähige oder pastöse Gipszusammensetzung aufgebracht werden kann, unterliegt die vorliegende Erfindung keinen relevanten Beschränkungen. Das Substrat sollte aber so beschaffen sein, dass die Gipszusammensetzung nach dem Trocknen fest auf dem Substrat haftet. Als Substrat kommen, neben allen Arten von Standarduntergründen, wie mineralische Estriche oder Trockenestriche, insbesondere Bodenbeläge, wie Holzdielenböden, festliegendes Parkett, Holzspanplatten, Holz-Zement-Platten, Altuntergründe mit keramischen Belägen, Altuntergründe auf der Basis von Estrichen jeglicher Art oder Beton in Betracht, sowie verformungsfreudige Untergründe, wie bituminöser Asphaltestrich. Ein besonders geeignetes Substrat ist ein Anhydritestrich.

Ein weiterer Aspekt der vorliegenden Erfindung betrifft eine Gipszusammensetzung, wie sie im Vorstehenden beschrieben ist, als Gipsspachtelmasse oder Estrich. Ebenso betrifft die vorliegende Erfindung die Verwendung einer Gipszusammensetzung, wie sie im Vorstehenden beschrieben ist, zur Herstellung eines Bodenbelags oder als Bestandteil eines Bodenbelags.

Für die Gipszusammensetzungen welche in einem erfindungsgemäßen Verfahren aufgetragen werden ist speziell hervorzuheben, dass sie eine im Vergleich zu bekannten Gipsspachtelmassen beschleunigte Trocknung aufweisen, was dazu führt, dass nach dem Auftrag Zusammensetzung schneller mit der Weiterbearbeitung der damit beschichteten Oberfläche begonnen werden kann. Zudem lässt sich die Zusammensetzung durch einfaches Vermischen mit Wasser zu einer fließfähigen oder pastösen Zusammensetzung verarbeiten, die auf Bodenbelägen jeglicher Art bereits bei einer geringen Auftragsmenge zu einer Schichtdicke von 10 mm oder mehr eine Spachtelschicht ausbildet, die nach ihrer Härtung eine ausgezeichnete Druckfestigkeit und Biegezugfestigkeit aufweist.

Die Gipszusammensetzungen werden nachfolgend anhand von Beispielen näher erläutert.

### Beispiele:

Die Zusammensetzungen verschiedener Formulierungen sind in Tabelle 1 angegeben:

**Tabelle 1**

| **Bestandteil** | **Beispiel 1** | **Beispiel 2** | **Beispiel 3** |
|---|---|---|---|
| Calciumaluminat | 10 | 15 | 14 |
| Calciumsulfat-Hemihydrat | 26 | 39 | 33 |
| Calciumsulfat-Dihydrat | 1 | 1 | 1 |
| Calciumcarbonat (2,5 µm) | 7 | 10 | 10 |
| Sand (0,1 -0,3 mm) | 21,54 | 33,54 | 27,54 |
| Sand (0,2 -0,8 mm) | 33 | | |
| Kalksteinmehl | | | 13 |
| Vinnapas 5025 L | 1 | 1 | 1 |
| Superplasticizer | 0,2 | 0,2 | 0,2 |
| Litiumcarbonat | 0,01 | 0,01 | 0,01 |
| K/Na-Tatrat | 0,1 | 0,1 | 0,1 |
| Foamstar PB 1922 | 0,1 | 0,1 | 0,1 |
| Tylose H 20 P2 | 0,05 | 0,05 | 0,05 |

Dabei stehen Beispiel 1 (erfindungsgemäß) für eine dickschichtige Anwendung und die Beispiele 2 und 3 (nicht erfindungsgemäß) für dünnschichtige Anwendungen. Die Beispiele unterscheiden sich im Bindemittelgehalt sowie in der Sieblinie der eingesetzten Füllstoffe. Alle Angaben in Tabelle 1 sind in Gewichtsteilen.

Die Zusammensetzungen wurden in Bezug auf ihre Eigenschaften untersucht. Dazu wurde die Druckfestigkeit und Biegezugfestigkeit gemäß der DIN EN 196 Teil 1 bestimmt.

Das Schwinden wurde in Anlehnung an DIN EN 13872 an Prüfkörpern in den Abmessungen 1*4*16 cm bestimmt. Abweichend von der Norm, die ein Ausschalen der Prüfkörper 24 h nach dem Anmischen der Zusammensetzung mit Wasser vorschreibt, wurden die Prüfkörper 3 Stunden nach dem Anmischen ausgeschalt. Anschließend wurden die Dimensionsänderungen in Längsrichtung über die Zeit nach Härtung für einen Zeitraum zwischen 3 h und 28 d bestimmt. Die Härtung erfolgte hierzu bei 25°C einmal bei 50% relativer Luftfeuchtigkeit und einmal bei 75% relativer Luftfeuchtigkeit. Die in der nachstehenden Tabelle 2 angegebenen Werte wurden als Differenz zwischen dem Maximum der Expansion und dem Minimalwert nach 28 Tagen bestimmt.

Der Restfeuchtegehalt verschiedener Zusammensetzung wurde nach einem Tag (24 h) bei 25°C und 75% relativer Luftfeuchtigkeit mit Hilfe eines CM-Geräts (Hersteller: Riedel-de-Haen) nach der Calciumcarbidmethode bestimmt. Die Bestimmung erfolgte in Anlehnung an DIN 18560 Teil 4. Abweichend von der in DIN 18560-4 beschriebenen CM-Methode wurde der Messwert nach 5 Minuten abgelesen.

Als Vergleichszusammensetzungen wurden zusätzlich die zementbasierten Zusammensetzungen "SCHÖNOX ZM Rapid" und "SCHÖNOX DE" sowie die gipsbasierte Zusammensetzung "SCHÖNOX AM PLUS" herangezogen. Die Ergebnisse der Bestimmung dieser Parameter sind der folgenden Tabelle 2 zu entnehmen:

**Tabelle 2:**

| | | **SCHÖNOX DE** | **SCHÖNOX ZM Rapid** | **SCHÖNOX AM-Plus** | **Bsp. 1** | **Bsp. 2** | **Bsp. 3** |
|---|---|---|---|---|---|---|---|
| Druckfestigkeit [N/mm2] | 1 d | 10,0 | 36,0 | 12,6 | 23,4 | 22,4 | 21,6 |
| | 7 d | 19,0 | 46,2 | 22,0 | 37,7 | 34,2 | 47,9 |
| | 28 d | 24,4 | 55,6 | 40,2 | 49,2 | 45,1 | 58,2 |
| Biegezugfestigkeit [N/mm²] | 1 d | 3,2 | 7,0 | 2,5 | 4,1 | 3,9 | 3,9 |
| | 7 d | 6,5 | 9,7 | 6,8 | 8,8 | 6,1 | 5,2 |
| | 28 d | 7,6 | 8,8 | 12,3 | 12,3 | 10,1 | 10,5 |
| **Schwinden [mm/m] 50% r.F.** | | -0,30 | -0,65 | -0,25 | -0,38 | -0,40 | -0,20 |
| **Schwinden [mm/m] 75% r.F.** | | -0,23 | -0,45 | -0,45 | -0,15 | -0,09 | -0,12 |
| **Restfeuchtegehalt [CM-%] nach 24 h bei 25°C und 75% r.F. 3 mm / 1 d** | | 5,3 | 2,4 | 4,5 | 3,1 | 3,9 | 4,0 |
| **10 mm / 1 d** | | 7,2 | 3,7 | 6,0 | 3,6 | 5,0 | 5,0 |
| **20 mm / 1 d** | | 8,9 | --- | 6,7 | 3,9 | --- | --- |
| **40 mm /1 d** | | 10,8 | --- | 7,8 | 4,2 | --- | --- |

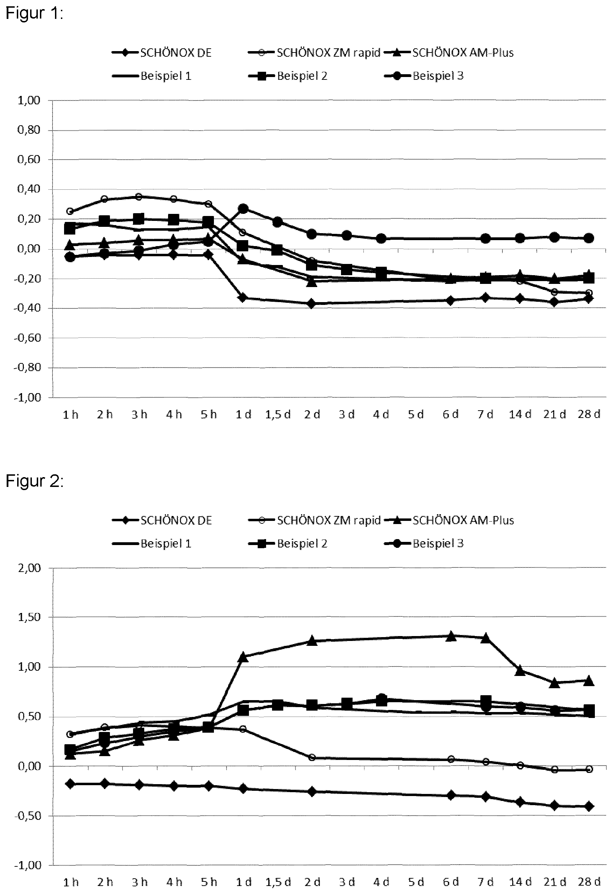

Die Ergebnisse der Bestimmung des Schwindverhaltens über den Zeitraum von 3 h bis 28 d sind der Figur 1 (Trocknen bei 50% relativer Luftfeuchtigkeit) und der Figur 2 (Trocknen bei 75% relativer Luftfeuchtigkeit) zu entnehmen.

Aus den bestimmten Daten ergibt sich, dass die Beispiele 1-3 eine im Vergleich zu konventionellen Gipszusammensetzungen (SCHÖNOX AM PLUS) schnelle Trocknung bei gleichzeitig sehr geringem Sehwundverhalten zeigen. Gegenüber zementären Zusammensetzungen zeigen die Beispiele 1-3 eine schnellere Trocknung bei vergleichbarem Schwinden (SCHÖNOX DE) bzw. geringeres Schwinden bei vergleichbarer Trocknung (SCHÖNOX ZM RAPID). Die Bindemittelzusammensetzung welche in einem erfindungsgemäßen Verfahren aufgetragen wird eignet sich daher insbesondere für die Untergrundvorbereitung im Bodenbereich, wobei durch das relativ schnelle Aushärten und Trocknen die Gesamtverarbeitungszeit signifikant verkürzt werden kann.

## Patentansprüche

1. Verfahren zum Auftragen einer Gipsspachtelmasse auf ein Substrat umfassend:
- Vermischen einer Gipszusammensetzung mit Wasser unter Bildung einer fließfähigen oder pastösen Gipszusammensetzung,
- Auftragen der fließfähigen oder pastösen Gipszusammensetzung in einer Schichtdicke von 10 mm oder mehr auf ein Substrat, und
- Aushärten der Zusammensetzung,
**dadurch gekennzeichnet, dass** die Gipszusammensetzung umfasst
- 25 bis 40 Gew.-% einer Mischung aus Calciumaluminat und Calciumsulfat-Hemihydrat und/oder -Anhydrit und/oder Calciumsulfat-Dihydrat als hydraulischen Bindemitteln, wobei das Gewichtsverhältnis von Calciumaluminat- zu Calciumsulfat-Hemihydrat und/oder -Anhydrit und/oder Calciumsulfat-Dihydrat-Bindemittel im Bereich von 1:1 bis 1:5 liegt, und
- 60 bis 65 Gew.-% Füllstoffe,
wobei sich die Gewichtsangaben jeweils auf das Trockengewicht der Gipszusammensetzung beziehen, und
**dadurch gekennzeichnet, dass** die Gipszusammensetzung zusätzlich ein Lithiumsalz, bevorzugt Lithiumcarbonat enthält, wobei das Lithiumsalz in einer Menge von 0,001 bis 0,05 Gew.-%, besonders bevorzugt in einer Menge von 0,005 bis 0,02 Gew.-% vorhanden ist.

2. Verfahren gemäß Anspruch 1, **dadurch gekennzeichnet, dass** das Gewichtsverhältnis von Calciumaluminat- zu Calciumsulfat-Hemihydrat und/oder -Anhydrit und/oder Calciumsulfat-Dihydrat-Bindemittel im Bereich von 1:1,6 bis 1:4, bevorzugt 1:2 zu 1:3,5 liegt.

3. Verfahren gemäß einem der Ansprüche 1 bis 2, **dadurch gekennzeichnet, dass** die Gipszusammensetzung Füllstoffe in Form von Sand und Calciumcarbonat und/oder Kalksteinmehl enthält.

4. Verfahren gemäß einem der vorhergehenden Ansprüche, **dadurch gekennzeichnet, dass** die Gipszusammensetzung zusätzlich Weinsäure und/oder ein Weinsäuresalz, bevorzugt ein Alkalimetallsalz der Weinsäure, enthält.

5. Verfahren gemäß Anspruch 6, **dadurch gekennzeichnet, dass** die Gipszusammensetzung Weinsäure oder und/oder ein Weinsäuresalz in einer Menge von 0,15 bis 0,005 Gew.-%, bevorzugt 0,1 bis 0,01 Gew.-%, und besonders bevorzugt 0,08 bis 0,015 Gew.-% enthält.

6. Verfahren gemäß einem der vorhergehenden Ansprüche, **dadurch gekennzeichnet, dass** die Gipszusammensetzung zusätzliche Additive ausgewählt aus Fließmitteln, Verdickungsmitteln, Farbstoffen und/oder Farbpigmenten, Entschäumern, Stabilisierungsmitteln, Härtungsverzögerern und Flexibilisierungsmitteln enthält.

7. Verfahren gemäß einem der vorhergehenden Ansprüche, **dadurch gekennzeichnet, dass** die Gipszusammensetzung infolge ihrer Härtung nach 28 Tagen ein Schwinden von nicht mehr als +/- 0,5 mm/m aufweist, wenn die Härtung bei 25°C und 50% relativer Luftfeuchtigkeit erfolgt, in Anlehnung an DIN EN 13872 an Prüfkörpern in den Abmessungen 1*4*16 cm.

8. Verfahren gemäß einem der vorhergehenden Ansprüche, **dadurch gekennzeichnet, dass** die Gipszusammensetzung infolge ihrer Härtung nach 3h ein Schwinden von nicht mehr als +/- 0,5 mm/m aufweist, wenn die Härtung bei 25°C und 50% relativer Luftfeuchtigkeit erfolgt, in Anlehnung an DIN EN 13872 an Prüfkörpern in den Abmessungen 1*4*16 cm.

## Claims

1. Method for applying a gypsum filling compound to a substrate, comprising:
- mixing a gypsum composition with water to form a fluid or paste-like gypsum composition,
- applying the fluid or paste-like gypsum composition in a layer thickness of 10 mm or more to a substrate, and
- curing the composition,
**characterized in that** the gypsum composition comprises
- 25 to 40 wt% of a mixture of calcium aluminate and calcium sulfate hemihydrate and/or anhydrite and/or calcium sulfate dihydrate as hydraulic binders, where the weight ratio of calcium aluminate to calcium sulfate hemihydrate and/or anhydrite and/or calcium sulfate dihydrate binder is in the range from 1:1 to 1:5, and
- 60 to 65 wt% of fillers,
the weight figures being based in each case on the dry weight of the gypsum composition, and
**characterized in that** the gypsum composition further comprises a lithium salt, preferably lithium carbonate, the lithium salt being present in an amount of 0.001 to 0.05 wt%, more preferably in an amount of 0.005 to 0.02 wt%.

2. Method according to Claim 1, **characterized in that** the weight ratio of calcium aluminate to calcium sulfate hemihydrate and/or anhydrite and/or calcium sulfate dihydrate binder is in the range from 1:1.6 to 1:4, preferably 1:2 to 1:3.5.

3. Method according to one of Claims 1 to 2, **characterized in that** the gypsum composition comprises fillers in the form of sand and calcium carbonate and/or finely ground limestone.

4. Method according to any of the preceding claims, **characterized in that** the gypsum composition further comprises tartaric acid and/or a tartaric salt, preferably an alkali metal salt of the tartaric acid.

5. Method according to Claim 6, **characterized in that** the gypsum composition comprises tartaric acid and/or a tartaric salt in an amount of 0.15 to 0.005 wt%, preferably 0.1 to 0.01 wt%, and more preferably 0.08 to 0.015 wt%.

6. Method according to any of the preceding claims, **characterized in that** the gypsum composition comprises additional additives selected from plasticizers, thickeners, dyes and/or colour pigments, defoamers, stabilizers, curing retarders, and flexibilizing agents.

7. Method according to any of the preceding claims, **characterized in that** on account of its curing the gypsum composition exhibits after 28 days a shrinkage of not more than +/- 0.5 mm/m when curing takes place at 25°C and 50% relative humidity, in a method based on DIN EN 13872 on test specimens with dimensions of 1*4*16 cm.

8. Method according to any of the preceding claims, **characterized in that** on account of its curing the gypsum composition exhibits after 3 hours a shrinkage of not more than +/- 0.5 mm/m when curing takes place at 25°C and 50% relative humidity, in a method based on DIN EN 13872 on test specimens with dimensions of 1*4*16 cm.

## Revendications

1. Procédé d'application d'une masse à spatuler de plâtre sur un substrat, comprenant
- le mélange d'une composition de plâtre avec de l'eau avec formation d'une composition de plâtre fluide ou pâteuse
- l'application de la composition de plâtre fluide ou pâteuse en une épaisseur de couche de 10 mm ou plus sur un substrat et
- la prise de la composition,
**caractérisé en ce que** la composition de plâtre comprend
- 25 à 40 % en poids d'un mélange d'aluminate de calcium et de sulfate de calcium hémihydraté et/ou d'anhydrite et/ou de sulfate de calcium dihydraté en tant que liants hydrauliques, le rapport en poids de liant aluminate de calcium à liant sulfate de calcium hémihydraté et/ou anhydrite et/ou sulfate de calcium dihydraté étant situé dans la plage de 1:1 à 1:5 et
- 60 à 65 % en poids de charges,
les indications de poids se rapportant à chaque fois au poids sec de la composition de plâtre et
**caractérisé en ce que** la composition de plâtre contient en plus un sel de lithium, de préférence du carbonate de lithium, le sel de lithium étant présent en une quantité de 0,001 à 0,05 % en poids, de manière particulièrement préférée en une quantité de 0,005 à 0,02 % en poids.

2. Procédé selon la revendication 1, **caractérisé en ce que** le rapport en poids de liant aluminate de calcium à liant sulfate de calcium hémihydraté et/ou anhydrite et/ou sulfate de calcium dihydraté se situe dans la plage de 1:1,6 à 1:4, de préférence de 1:2 à 1:3,5.

3. Procédé selon l'une des revendications 1 à 2, **caractérisé en ce que** la composition de plâtre contient des charges sous forme de sable et de carbonate de calcium et/ou de poudre de calcaire.

4. Procédé selon l'une des revendications précédentes, **caractérisé en ce que** la composition de plâtre contient en outre de l'acide tartrique et/ou un sel d'acide tartrique, de préférence un sel de métal alcalin de l'acide tartrique.

5. Procédé selon la revendication 6, **caractérisé en ce que** la composition de plâtre contient de l'acide tartrique et/ou un sel de l'acide tartrique en une quantité de 0,15 à 0,005 % en poids, de préférence 0,1 à 0,01 % en poids et de manière particulièrement préférée de 0,08 à 0,015 % en poids.

6. Procédé selon l'une des revendications précédentes, **caractérisé en ce que** la composition de plâtre contient des additifs additionnels, choisis parmi les fluidifiants, les épaississants, les colorants et/ou les pigments colorés, les antimousses, les agents de stabilisation, les retardateurs de prise et les agents de flexibilisation.

7. Procédé selon l'une des revendications précédentes, **caractérisé en ce que** la composition de plâtre présente, suite à sa prise, après 28 jours, un retrait qui n'est pas supérieur à +/- 0,5 mm/m lorsque la prise à lieu à 25 °C et sous une humidité relative de l'air de 50 %, conformément à la norme DIN EN 13872 sur des éprouvettes présentant les dimensions 1*4*16 cm.

8. Procédé selon l'une des revendications précédentes, **caractérisé en ce que** la composition de plâtre présente, suite à sa prise, après 3 heures, un retrait qui n'est pas supérieur à +/- 0,5 mm/m lorsque la prise a lieu à 25 °C et sous une humidité relative de l'air de 50 %, conformément à la norme DIN EN 13872 sur des éprouvettes présentant les dimensions 1*4*16 cm.
